(19) Europäisches Patentamt
European Patent Office
Office européen des brevets

(11) Veröffentlichungsnummer: **0 054 904**
B1

(12) # EUROPÄISCHE PATENTSCHRIFT

(45) Veröffentlichungstag der Patentschrift: **10.04.85**

(51) Int. Cl.⁴: **C 09 B 29/15** // D06P1/04

(21) Anmeldenummer: **81110502.2**

(22) Anmeldetag: **16.12.81**

(54) **Wasserunlösliche Monoazofarbstoffe, ihre Herstellung und ihre Verwendung.**

(30) Priorität: **24.12.80 DE 3049180**

(43) Veröffentlichungstag der Anmeldung: **30.06.82 Patentblatt 82/26**

(45) Bekanntmachung des Hinweises auf die Patenterteilung: **10.04.85 Patentblatt 85/15**

(84) Benannte Vertragsstaaten: **BE CH DE FR GB IT LI**

(56) Entgegenhaltungen:
**DE - B - 1 089 094**
**FR - A - 2 013 809**
**US - A - 2 283 326**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 526, D-6369 Schöneck 1 (DE)**
Erfinder: **Kühlein, Klaus, Dr., Fasanenweg 41, D-6233 Kelkheim (DE)**
Erfinder: **Tappe, Horst, Dr., Ringstrasse 9, D-6057 Dietzenbach (DE)**
Erfinder: **Kallay, Maria, Kastanienweg 7d, D-6240 Königstein (DE)**
Erfinder: **Kosubek, Uwe, Am Vogelanger 28, D-6087 Büttelborn (DE)**
Erfinder: **Löwenfeld, Rudolf, Dr., Quellenweg 2, D-6072 Dreieich (DE)**

(74) Vertreter: **Urbach, Hans-Georg, Dr. et al, Hanauer Landstrasse 526, D-6000 Frankfurt am Main 61 (DE)**

EP 0 054 904 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Azofarbstoffe der Formel I

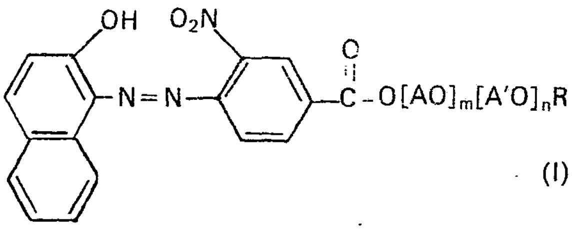

(I)

in der

A und A' unabhängig voneinander lineare oder verzweigte Alkylenreste mit 2 bis 6 C-Atomen,

R Wasserstoff, Alkyl mit 1 bis 4 C-Atomen, Cycloalkyl mit 5 oder 6 C-Atomen, Alkenyl mit 3 bis 5 C-Atomen, Phenyl, substituiertes Phenyl, Benzyl, Phenethyl, Alkylcarbonyl mit 1 bis 4 C-Atomen oder Benzoyl bedeuten und

m die Werte 1 bis 5 und

n die Werte 0 bis 1 annehmen kann, ihre Herstellung durch Diazotierung von Aminen der Formel II

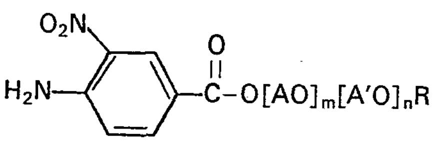

(II)

und Kupplung auf β-Naphthol, sowie ihre Verwendung zum Färben und Bedrucken von hydrophoben Fasermaterialien.

Farbstoffe auf Basis β-Naphthol mit 4-Amino-3-nitrobenzoesäureester als Diazokomponente sind bereits bekannt. So werden in der DE-OS 10 89 094 Farbstoffe beschrieben, die in der Diazokomponente eine Estergruppe enthalten, deren Alkylreste mindestens 8 C-Atome aufweisen und die gut zum Färben von z.B. Fetten und Wachsen eingesetzt werden können. Zum Färben von Polyestermaterialien sind diese Farbstoffe jedoch weniger gut geeignet.

In der japanischen Patentschrift 53-38780 werden Farbstoffe beschrieben, die in der Diazokomponente Estergruppen aufweisen, deren Alkylreste 1 bis 4 C-Atome haben. Sie färben Polyester in brillanten orangen Tönen, zeigen jedoch noch Mängel im Hinblick auf die Echtheiten der Färbung und insbesondere im Hinblick auf die Applikation.

Es wurde nun überraschenderweise gefunden, dass sich diese Mängel beheben lassen, wenn, wie es bei den erfindungsgemässen Farbstoffen der Fall ist, die Alkylreste der Estergruppen durch Sauerstoffatome unterbrochen werden.

So ist z.B. der erfindungsgemässe Farbstoff der Formel

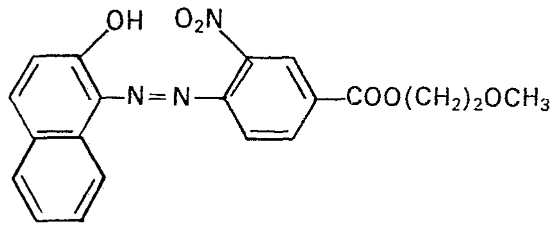

dem in der japanischen Patentschrift 53-38780 beanspruchten Farbstoff der Formel

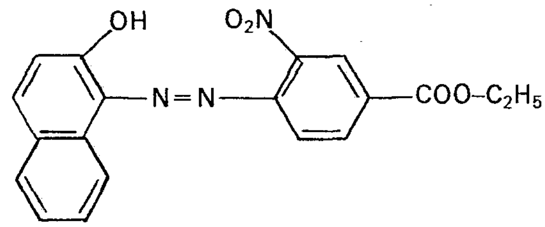

überraschenderweise im Ziehverhalten, im Aufbauvermögen und in der Farbausbeute sehr erheblich überlegen.

Diese Überlegenheit ergibt sich beim Färben und Bedrucken aller technisch bedeutenden hydrophoben Fasermaterialien, insbesondere auf Polyester-, Triacetat- und Polyamidmaterialien und nach allen gängigen Färbeverfahren und Druckverfahren, insbesondere beim Carrierfärben oder bei dem für Polyester besonders wichtigen HT-Färbeprozess bei 120 °C.

Der erfindungsgemässe Farbstoff eignet sich somit im Gegensatz zu dem bekannten hervorragend zur Herstellung farbstarker brillanter Färbungen und Drucke auf den genannten Fasermaterialien.

Lineare oder verzweigte Alkylreste, die für A oder A' stehen können, sind beispielsweise der Ethylen-, Propylen-1,2-, Propylen-1,3-, Propylen-2,3-, Butylen-1,2-, Butylen-1,3-, Butylen-1,4-, Butylen-2,3-, Butylen-2,4-, Butylen-3,4-, 2,2-Dimethylpropylen-1,3-, 2-Ethylpropylen1,3-, oder der Hexylen-1,6-Rest.

Alkylreste mit 1 bis 4 C-Atomen, die für R stehen können, sind Methyl, Ethyl, n-Propyl, i-Propyl, n-Butyl, sek-Butyl, i-Butyl und tert.-Butyl.

Cycloalkylreste mit 5 oder 6 C-Atomen, die für R stehen können, sind Cyclopentyl und Cyclohexyl.

Alkenylreste mit 3 bis 5 C-Atomen, die für R stehen können, sind Allyl, Methallyl, Crotyl. Gegebenenfalls substituierte Phenyl-reste, die für R stehen können, sind o-, m- oder p-Methyl- oder -Chlorphenyl, p-Methoxy- und p-Ethoxy-phenyl.

Alkylcarbonylreste mit 1 bis 4 C-Atomen, die für R stehen können, sind Formyl, Acetyl, Propionyl, n-Butyryl und i-Butyryl.

Bevorzugte Reste für die A oder A' stehen können, sind Propylen-1,2, Propylen-2,3, Butylen-1,2, Butylen-3,4-Butylen-1,4 und Hexylen-1,6.

Besonders bevorzugt stehen die Reste A oder A' für Ethylen. Bevorzugte Reste, für die R stehen kann, sind Alkyl mit 1 bis 4 C-Atomen, Allyl, Phenyl, Benzyl, Phenethyl und Acetyl.

Besonders bevorzugt sind Farbstoffe, in denen der Rest R für Wasserstoff, Methyl, Ethyl, n-Butyl steht.

Ein bevorzugter Wert für n ist 0.

Besonders bevorzugte Farbstoffe der Formel I sind insbesondere auch solche, die Kombinationen bevorzugter Merkmale enthalten, wie z.B. solche, in denen n Null ist und gleichzeitig A Ethylen bedeutet.

Die Amine der Formel II können nach an sich bekannten Methoden hergestellt werden, indem man 3-Nitro-4-aminobenzoesäure verestert, wie es z.B. in Liebigs Ann. Chem. 371, 168 (1909) beschrieben wird. Sie lassen sich auch durch Umesterung eines 3-Nitro-4-aminobenzoesäureesters, der sich von einem niedrigsiedenden Alkohol ableitet, mit einem Alkohol der Formel

$$HO[AO]_m[A'O]_nR$$

herstellen. Die Umesterung kann, wie es z.B. in Weygand-Hilgetag «Organisch-chemische Experimentierkunst», Verlag J.A. Barth, Leipzig (1970), S. 385, und dort zitierter Literatur beschrieben wird, ausgeführt werden.

Die Herstellung der erfindungsgemässen Farbstoffe der Formel I erfolgt, indem man ein Amin der allgemeinen Formel II diazotiert und auf β-Naphthol kuppelt. Die Diazotierung des Amins der Formel II geschieht in an sich bekannter Weise durch Einwirkung von salpetriger Säure oder salpetrige Säure abspaltenden Verbindungen. Beispielsweise können die Amine in Schwefelsäure, Salzsäure oder in niederen aliphatischen Carbonsäuren, die gegebenenfalls mit Wasser verdünnt werden können, wie z.B. Ameisensäure, Essigsäure oder Propionsäure, suspendiert oder gelöst und bei 0° bis 50 °C durch Zusatz von Nitrosylschwefelsäure oder Natriumnitrit diazotiert werden.

Die Kupplung wird üblicherweise in Wasser unter Zusatz einer Base durchgeführt, die für eine ausreichende Konzentration an Naphtholat-Anionen sorgt. Basen, die hierfür bekannterweise eingesetzt werden, sind z.B. Alkalihydroxyde oder Alkalisalze schwacher Säuren, wie z.B. Natrium- oder Kaliumhydroxyd, Soda, Pottasche oder auch Natriumhydrogencarbonat. Darüberhinaus werden zweckmässigerweise Puffersubstanzen zugesetzt, die den Säureüberschuss der Diazoniumlösung und die bei der Kupplung frei werdende Säure abfangen. Solche Puffer sind bekanntlich ebenfalls vorzugsweise Alkalisalze schwacher Säuren, wie z.B. Natriumacetat oder Natriumhydrogenphosphat.

Die Kupplung kann auch in einer niederen aliphatischen Carbonsäure, wie z.B. Essigsäure, die zweckmässigerweise mit Wasser verdünnt ist, bzw. in einer Mischung aus Wasser und einem in Wasser wenig löslichen Alkohol, wie n- oder i-Butanol, stattfinden. Zweckmässigerweise wird auch dabei das System durch Basen, wie Natriumacetat oder Natriumhydrogenphosphat, gepuffert. Die Kupplungstemperatur liegt in der Regel zwischen 0° und 30 °C.

Die erfindungsgemässen Farbstoffe eignen sich insbesondere zum Färben und Bedrucken von hydrophoben Fasermaterialien, wie beispielsweise Polyamid, Cellulose-2½-acetat, Cellulosetriacetat, und insbesondere Polyestermaterialien, wie z.B. Polyethylenglykolterephthalat.

Sie liefern hierauf nach üblichen Färbe- und Druckverfahren farbstarke orange Färbungen und Drucke mit sehr guten Echtheitseigenschaften, insbesondere sehr guter Licht- und Thermofixierechtheit.

Das Färben der genannten Fasern, die einzeln oder im Gemisch mit anderen Faserarten, wie z.B. Baumwolle, regenerierter Zellulosefasern oder Wolle vorliegen können, mit den erfindungsgemässen Farbstoffen erfolgt in an sich bekannter Weise zweckmässig aus wässriger Suspension in Gegenwart von Carriern zwischen etwa 80 bis 110 °C, in Abwesenheit von Carriern zwischen etwa 110 bis 140 °C, sowie nach dem sogenannten Thermofixierverfahren bei etwa 180 bis 230 °C. Das Bedrucken der genannten Materialien kann so durchgeführt werden, dass die mit den neuen Farbstoffen bedruckte Ware in Gegenwart eines Carriers bei Temperaturen zwischen etwa 80 bis 110 °C oder auch in Abwesenheit eines Carriers bei etwa 110 bis 180 °C gedämpft oder auch nach dem sogenannten Thermofixierverfahren bei etwa 180 bis 230 °C behandelt wird.

Sofern Textilmaterialien gefärbt oder bedruckt werden sollen, die neben den genannten hydrophoben synthetischen Fasern noch natürliche Fasern, insbesondere die oben genannten enthalten, können die erfindungsgemässen Farbstoffe auch mit anderen Farbstoffklassen, wie z.B. Küpen-, Direkt- oder Reaktivfarbstoffen, gemeinsam eingesetzt werden.

Es ist daher in diesen Fällen möglich, auch Mischungen der erfindungsgemässen Farbstoffe mit den anderen Farbstoffklassen zu applizieren und die Farbstoffe dann in an sich bekannter Weise gleichzeitig oder nacheinander zu fixieren.

Die erfindungsgemässen Farbstoffe eignen sich auch zum Färben der vorstehend aufgeführten hydrophoben Materialien aus organischen Lösungsmitteln und zum Färben in der Masse.

Die erfindungsgemässen Farbstoffe der Formel I sind bei der Applikation nach einem der oben angegebenen Verfahren den bisher bekannten, vergleichbaren Farbstoffen überraschenderweise im Ziehverhalten, insbesondere beim Färben mit Carriern bei 106°, beim Färben bei 120 °C und in der Verkochprobe erheblich überlegen.

Sie liefern mit geringem Farbstoffeinsatz farbstarke Färbungen hoher Brillanz und haben ein vorzügliches Aufbauvermögen. Darüberhinaus zeigen sie ein besonders günstiges vorteilhaftes Verhalten beim Finish.

Die folgenden Ausführungsbeispiele veranschaulichen die Herstellung der erfindungsgemässen Farbstoffe und Möglichkeiten zu ihrer Anwendung.

Beispiel 1

48,0 g 4-Amino-3-nitro-benzoesäure-(2-methoxyethyl)-ester werden in Eisessig bei 15 °C durch Zutropfen von 66,0 g Nitrosylschwefelsäure (40,5%ig) diazotiert. Die Diazolösung lässt man bei 0° bis 5 °C in eine Lösung von 31,6 g β-Naphthol in 240 ml 1 n Natronlauge und 144 g wasserfreiem Natriumacetat in 2000 g Eis/Wasser einlaufen. Nach beendeter Kupplung wird der entstandene Farbstoff abgesaugt, mit Wasser neutral und salzfrei gewaschen und unter vermindertem Druck getrocknet. Man erhält auf diese Weise 76,7 g des Farbstoffs der Formel

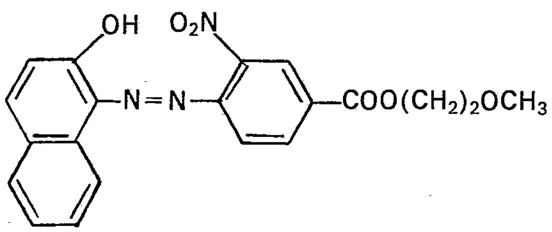

der bei 158 bis 162 °C schmilzt.

Beispiel 2

0,5 g des feindispergierten Farbstoffs des Beispiels 1 werden in 2000 g Wasser eingerührt. Dann wird die Dispersion mit Essigsäure auf einen pH-Wert von 5 bis 6 eingestellt und mit 4,0 g Ammoniumsulfat sowie 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykol terephthalat ein und färbt in einem Färbeautoklaven 1 Stunde bei 120 °C. Nach anschliessendem Spülen, reduktiver Nachbehandlung mit einer 0,2%igen alkalischen Natriumdithionitlösung während 15 Minuten bei 70 bis 80 °C, Spülen und Trocknen, erhält man ein farbstarke, brillante orange Färbung mit sehr guten coloristischen Eigenschaften.

Beispiel 3

20,0 g des Farbstoffs des Beispiels 1 werden in feiner Verteilung einer Druckpaste, die 45,0 g Johannisbrotkernmehl, 6,0 g 3-nitrobenzolsulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 40 Sekunden bei 195 °C, Spülen und Fertigstellung, wie in Beispiel 2 beschrieben, einen farbstarken brillanten orangen Druck mit sehr guten coloristischen Eigenschaften.

Analog dem Beispiel 1 lassen sich erfindungsgemässe Farbstoffe der Formel I herstellen, in denen der Rest $[AO]_m[A'O]_nR$ die in der folgenden Liste aufgeführten konkreten Bedeutungen hat.

| $-[AO]_m-[A'O]_n-R$ |
|---|
| $-(CH_2)_2OC_2H_5$ |
| $-(CH_2)_2O-C_3H_7$ (n) |
| $-(CH_2)_2O-C_3H_7$ (i) |
| $-(CH_2)_2O-C_{49}$ (n) |
| $-(CH_2)_2O-C_4H_9$ (i) |
| $-(CH_2)_2O-C_4H_9$ (tert.) |
| $-(CH_2)_2OCH_2CH=CH_2$ |
| $-(CH_2)_2OC_6H_{11}$ |
| $-(CH_2)_2OC_6H_5$ |
| $-(CH_2)_2OCH_2C_6H_5$ |
| $-(CH_2)_2OCOCH_3$ |
| $-(CH_2)_2OCOC_6H_5$ |
| $-(CH_2)_2OH$ |
| $-(CH_2)_2O(CH_2)_2C_6H_5$ |
| $-(CH_2)_2O(CH_2)_2OCH_3$ |
| $-(CH_2)_2O(CH_2)_2OC_2H_5$ |
| $-(CH_2)_2O(CH_2)O-C_4H_9$ (n) |
| $-(CH_2)_2O(CH_2)_2OCH_2CH=CHCH_3$ |
| $-(CH_2)_2O(CH_2)_2OH$ |
| $-(CH_2)_2O(CH_2)_2OCOCH_3$ |
| $-(CH_2)_2O(CH_2)_2O(CH_2)_2OCH_3$ |
| $-(CH_2)_2O(CH_2)_2O(CH_2)_2OC_2H_5$ |
| $-(CH_2)_2O(CH_2)_2O(CH_2)_2O-C_4H_9$ (n) |
| $-(CH_2)_2O(CH_2)_2O(CH_2)_2O(CH_2)_2OC_2H_5$ |
| $-(CH_2)_2O(CH_2)O(CH_2)_2O(CH_2)_2O(CH_2)_2O-C_4H_9$ (n) |
| $-(CH_2)_2O(CH_2)_2O(CH_2)_2O(CH_2)_2OH$ |
| $-(CH_2)_2O(CH_2)_2O(CH_2)_2O(CH_2)_2OCOC_2H_5$ |
| $-(CH_2)_2O(CH_2)_2O(CH_2)_2O(CH_2)O(CH_2)_2OC_2H_5$ |
| $-(CH_2)_2O(CH_2)O(CH_2)_2O(CH_2)_2O(CH_2)OH$ |
| $-(CH_2)_2O(CH_2)_2O(CH_2)_2O(CH_2)_2O(CH_2)_2O(CH_2)_2O-C_4H_9$(n) |

(Fortsetzung)

| $-[AO]_m-[A'O]_n-R$ |
|---|
| 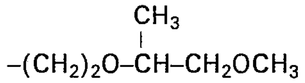 |
| 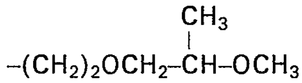 |
| 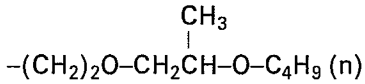 |
| 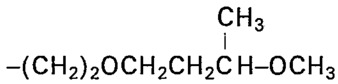 |
| 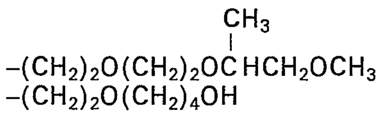 |
| $-(CH_2)_2O(CH_2)_4OH$ |
| 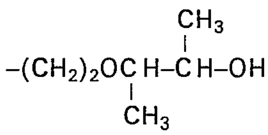 |
| $-(CH_2)_2O(CH_2)_4OCH_3$ |
| 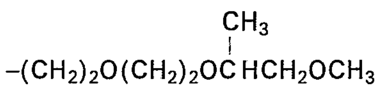 |
| $-(CH_2)_2O(CH_2)_3OH$ |
| $-(CH_2)_2O(CH_2)_3OCOCH_3$ |
| 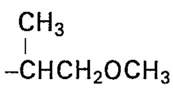 |
| 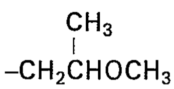 |
| 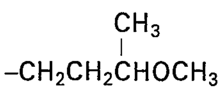 |
| $-(CH_2)_3OH$ |
| $-(CH_2)_3OCH_2C_6H_5$ |
| $-(CH_2)_4OCOC_4H_9$ |
| $-(CH_2)_4OCOC_3H_7$ |

**Patentansprüche**

1. Von Carbonsäure- oder Sulfonsäure-Gruppen freie Monoazofarbstoffe der allgemeinen Formel I

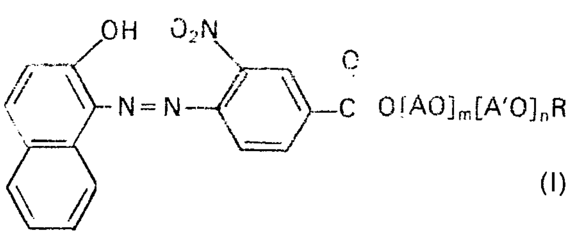

(I)

in der

A und A' unabhängig voneinander lineare oder verzweigte Alkylenreste mit 2 bis 6 C-Atomen,

R Wasserstoff, Alkyl mit 1 bis 4 C-Atomen, Cycloalkyl mit 5 oder 6 C-Atomen, Alkenyl mit 3 bis 5 C-Atomen, Phenyl, substituiertes Phenyl, Benzyl, Phenethyl, Alkylcarbonyl mit 1 bis 4 C-Atomen oder Benzoyl bedeuten und

m die Werte 1 bis 5 und

n die Werte 0 bis 1 annehmen kann.

2. Farbstoffe nach Anspruch 1, dadurch gekennzeichnet, dass A und A' Ethylen bedeuten.

3. Farbstoffe nach Anspruch 1, dadurch gekennzeichnet, dass n Null ist.

4. Farbstoffe nach den Ansprüchen 1 bis 3, dadurch gekennzeichnet, dass n Null ist und A Ethylen bedeutet.

5. Farbstoffe nach den Ansprüchen 1 bis 4, dadurch gekennzeichnet, dass R Alkyl mit 1 bis 4 C-Atomen, Allyl, Phenyl, Benzyl, Phenethyl oder Acetyl bedeutet.

6. Verfahren zur Herstellung von Monoazofarbstoffen der Formel I des Anspruchs 1, dadurch gekennzeichnet, dass man ein Amin der allgemeinen Formel II

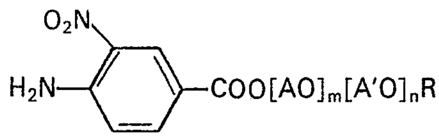

(II)

in an sich bekannter Weise diazotiert und auf β-Naphthol kuppelt.

7. Verwendung von Farbstoffen der Formel I des Anspruchs 1 und deren Mischungen mit Farbstoffen anderer Farbstoffklassen zum Färben und Bedrucken von hydrophoben Fasermaterialien.

**Revendications**

1. Colorants mono-azoïques dépourvus de radicaux carboxy ou sulfo, qui répondent à la formule générale I:

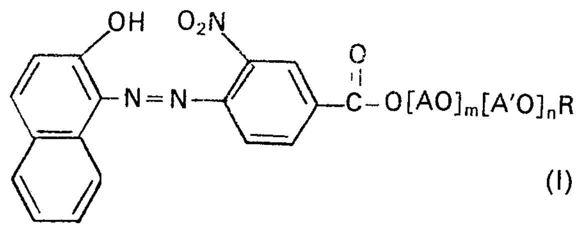

(I)

dans laquelle

A et A' représentent chacun, indépendamment l'un de l'autre, un radical alkylène linéaire ou ramifié qui contient de 2 à 6 atomes de carbone,

R représente l'hydrogène, un alkyle contenant de 1 à 4 atomes de carbone, un cycloalkyle contenant 5 ou 6 atomes de carbone, un alcényle contenant de 3 à 5 atomes de carbone, un phényle, un phényle substitué, un benzyle, un phényléthyle, un alkylcarbonyle contenant de 1 à 4 atomes de carbone ou un benzoyle,

m représente un nombre de 1 à 5 et

n représente un nombre de 0 à 1.

2. Colorants selon la revendication 1, caractérisés en ce que A et A' représentent chacun un radical éthylène.

3. Colorants selon la revendication 1, caractérisés en ce que n est égal à 0.

4. Colorants selon l'une quelconque des revendications 1 à 3, caractérisés en ce que n est égal a 0 et A représente un radical éthylène.

5. Colorants selon l'une quelconque des revendications 1 à 4, caractérisés en ce que R représente un alkyle contenant de 1 à 4 atomes de carbone, un allyle, un phenyle, un benzyle, un phényléthyle ou un acétyle.

6. Procédé de préparation de colorants monoazoïques de formule I selon la revendication 1, procédé caractérisé en ce qu'on diazote une amine répondant à la formule générale II:

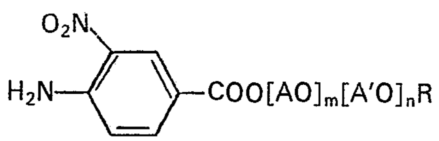

(II)

et on copule le diazoïque sur le β-naphtol, cela en opérant de manière connue.

7. Application de colorants de formule I selon la revendication 1, et de leurs mélanges avec des colorants appartenant à d'autres catégories de colorants, à la teinture et à l'impression de matières fibreuses hydrophobes.

## Claims

1. Monoazo dyestuffs, free of carboxylic acid groups or sulphonic acid groups, of the general formula I

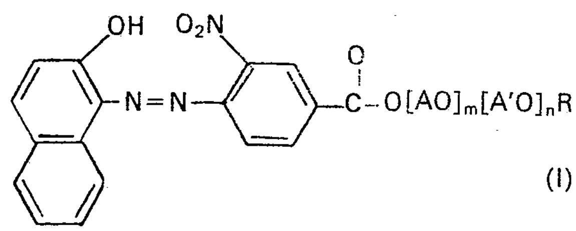

(I)

in which

A and A' independently of one another denote linear or branched alkylene radicals having 2 to 6 C atoms,

R denotes hydrogen, alkyl having 1 to 4 C atoms, cycloalkyl having 5 or 6 C atoms, alkenyl having 3 to 5 C atoms, phenyl, substituted phenyl, benzyl, phenethyl, alkylcarbonyl having 1 to 4 C atoms or benzoyl, and

m can assume the values 1 to 5 and

n the values 0 to 1.

2. Dyestuffs according to Claim 1, characterised in that A and A' denote ethylene.

3. Dyestuffs according to Claim 1, characterised in that n is zero.

4. Dyestuffs according to Claims 1 to 3, characterised in that n is zero and A denotes ethylen.

5. Dyestuffs according to Claims 1 to 4, characterised in that R denotes alkyl having 1 to 4 C atoms, allyl, phenyl, benzyl, phenethyl or acetyl.

6. Process for the preparation of monoazo dyestuffs of the formula I of Claim 1, characterised in that an amine of the general formula II

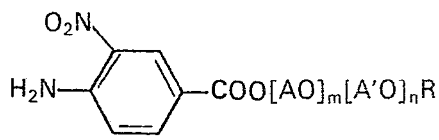

(II)

is diazotised in a manner which is in itself known and the diazotisation product is coupled with β-naphthol.

7. Use of dyestuffs of the formula I of Claim 1 and their mixtures with dyestuffs of other dyestuff classes for the dyeing and printing of hydrophobic fibre materials.